# EUROPEAN PATENT APPLICATION

(11) **EP 2 369 868 A1**
(43) Date of publication of application: **28.09.2011**
(21) Application number: 10197310.5
(22) Date of filing: 29.12.2010
(51) Int. Cl.: H04W 36/00, H04W 92/04

(54) **Location based call routing**

(30) Priority: 25.03.2010 US 661941
(71) Applicant: Mitel Networks Corporation, Ottawa, ON K2K 2W7 (CA)
(72) Inventor: Couse, Peter, Ottawa Ontario K20 0G5 (CA)
(74) Representative: Derry, Paul Stefan

(57) **Abstract**

A call routing system, phone system, and mobile phone for routing calls based on a location of the mobile phone. By routing calls, mobile phone charges can be eliminated or reduced by directing calls to other phones near the mobile phone. In a typical embodiment, user configuration information for the system is setup before receiving calls. The user configuration information can define multiple zones with each zone associated with a routing number. During operation, the mobile phone can periodically update its location using a positioning system thereon. When a call is made to the mobile phone, the call can be routed to another number by the phone system when the mobile phone's location is within a defined zone. The zones can be specific to broad and can overlap each other. In one illustration, a first zone can be an office while a second zone can be a building.

## Description

### Description

This application generally relates to phones, and more particularly, to a communication system for directing calls to a routing number when the mobile phone is within a defined area configured with said routing number.

Today, global positioning systems have been incorporated into almost every type of mobile phone available on the market. Global positioning systems can use a combination of satellites that are positioned within Earth's orbit. To determine its location, the mobile phone can process data it receives from the satellites to compute the distances to each satellite. These distances along with the satellites' locations can be used with the possible aid of trilateration to compute the position of the mobile phone. Elevation information can also be included as part of the determined location information.

Numerous possibilities exist for software developers to capitalize on the location information provided by global positioning systems. For example, the location information can be displayed on a map. The user can then determine their exact coordinates to find places of interest. Applications can also show derived information such as direction and speed. Often, this derived information can be calculated from positional changes.

Nevertheless, global positioning system applications have not fully utilized location information. When a user of a mobile device is at a known location, calls are still routed to the mobile device even though a nearby phone can be used. By routing incoming calls to the nearby phone, mobile phone minutes can be saved. To provide an example of the call routing feature describe above, when a user is in a hotel room, the user can wish to have calls to their PBX extension routed to their hotel room phone. Currently, however, call routing applications do not provide such capabilities.

While a single point was described above, there can be instances where a user would like to define a much larger area for detecting where they are present and routing calls based on that information. For example, a user can wish to have their calls forwarded to a house phone anytime their mobile phone is within or near their house. A need therefore exists for a system and method that provides location based call routing for overcoming the above-described limitations.

The novel features believed to be characteristic of the application are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The application itself, however, as well as a preferred mode of use, further objectives and advantages thereof, will be best understood by reference to the following detailed description of illustrative embodiments when read in conjunction with the accompanying drawings, wherein:

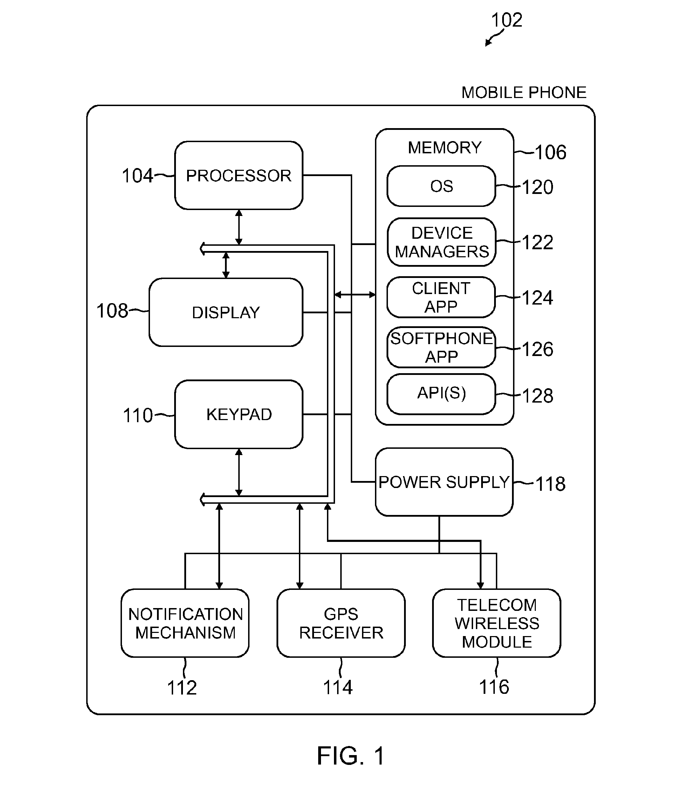

Figure 1 depicts exemplary hardware and software components of a typical mobile phone in accordance with one aspect of the present application;
Figure 2 is a block diagram illustrating automatic call routing features within a business environment in accordance with one aspect of the present application;
Figure 3 represents exemplary call routing features when a user departs outside a known location in accordance with one aspect of the present application;
Figure 4 provides a further illustration of call routing features when the user enters another recognized location in accordance within one aspect of the present application;
Figure 5 is a flow chart that shows exemplary processes for configuring a mobile phone to route calls in accordance with one aspect of the present application;
Figure 6 shows typical configuration processes for a phone system to route calls in accordance with one aspect of the present application; and
Figure 7 depicts illustrative processes for routing calls based on location information of the mobile phone in accordance with one aspect of the present application.

The description set forth below in connection with the appended drawings is intended as a description of presently-preferred embodiments of the application and is not intended to represent the only forms in which the present application can be constructed and/or utilized. The description sets forth the functions and the sequence of steps for constructing and operating the application in connection with the illustrated embodiments. It is to be understood, however, that the same or equivalent functions and sequences can be accomplished by different embodiments that are also intended to be encompassed within the spirit and scope of this application.

### Overview

The present application generally relates to telecommunications, and more particularly, to a phone system for directing calls to a routing number when the mobile phone is within a defined area. In an illustrative embodiment, the user can begin by setting up user configuration information, which is typically provided before calls are routed. The user configuration information can define multiple zones with each zone associated with a routing number. During operation, the mobile phone can periodically update its location using a positioning system thereon. Location information can be provided by a global positioning system (GPS) on the mobile phone. When an incoming call is placed to the user's extension number, the call can be routed by the phone system to another configured number when the mobile phone's location is within a defined zone. When the mobile phone's location is not within any known location, the phone system can route the incoming call to the mobile phone. The zones can be specific to broad and can overlap each other. When a mobile phone's location is detected within both the specific and broad zones, the phone system can route the call to the configured number associated with the specific zone.

As shown above, the present application is directed to a GPS receiver within a user's mobile phone to identify locations that the user wishes to make known to their private branch exchange (PBX) call routing capabilities. In one example, a user can go through a process of identifying GPS coordinates for a hotel room, which the call routing application would store. An application on the mobile phone can then poll the GPS receiver to determine the user's location and compare it to a list of stored locations, one of which can be the location of the hotel room the user is staying in. When the user is present in their hotel room, the application can forward calls to the hotel room phone. On the other hand, when the user leaves their hotel room, the application can route calls to their cell phone. Presented below, are a number of systems and methods for identifying a location based on GPS coordinate readings and routing calls based on the location. This can be useful for identifying a location that has a small footprint such as a hotel room as well as a large area such as an entire building. Those skilled in the relevant art will appreciate that those embodiments described above were for illustrative purposes, and do not limit the scope of the present application.

### Mobile Phone

Before describing specific operations of the mobile phone and phone system, the hardware and software of a mobile phone 102 will be described below. Generally described, the mobile phone 102 can have a processor 104 for implementing logic, a memory 106, a display 108, and a keypad 110. The display 108 of the mobile phone 102 can be a liquid crystal display (LCD), or any other type of display commonly used in mobile phones 102. The display 108 can be touch-sensitive, and can act as an input device. The keypad 110 can be a push button numeric dialing pad (such as on a typical telephone), a multi-key keyboard (such as a conventional keyboard), or any other device for inputting textual data. In some mobile phones 102, the keypad 110 can be shown on the display 108 allowing the touch-sensitive display 108 to act as the keypad 110.

The memory 106 generally includes both volatile memory (e.g., RAM) and non-volatile memory (e.g., ROM, Flash Memory, or the like). The non-volatile portion of the memory 106 can be used to store persistent information which should not be lost when the mobile phone 102 is powered down. The mobile phone 102 can include an operating system (OS) 120, such as Windows.RTM. CE or Windows Mobile.RTM. available from Microsoft Corporation, Redmond, Wash., or other OS. The OS can reside in the memory 106 and be executed on the processor 104.

The memory 106 can also include one or more device managers 122 for interacting with one or more I/O devices. The device managers 122 can be software installed on the mobile phone 102. A device manager 122 can correspond to each I/O device. In addition to the device manager 122, one or more application programs can be loaded into memory 106 and run on or in association with the operating system 120. Examples of application programs that can be run on the mobile phone 102 include phone dialer programs, email programs, scheduling programs, personal information management (PIM) programs, word processing programs, spreadsheet programs, Internet browser programs, instant messaging programs, GPS and/or mapping programs, health monitoring programs, weather programs, and so forth. Of course, numerous other types of application programs usable on the mobile phone 102 will be apparent to those of ordinary skill in the relevant art.

These applications can use and store information in the memory 106, such as e-mail or other messages used by an e-mail application, contact information used by a PIM, appointment information used by a scheduling program, documents used by a word processing program, instant messaging information used by an instant messaging program, maps and waypoints used by the GPS and/or mapping programs, medical information used by the health monitoring program, and the like.

Also within the memory 106, a client application 124 can be run on the mobile phone 102, which allows the user to configure user information on the phone system as well as update its location. The client application 124 can also allow the user to specify the frequency at which location updates are made. The client application 124 can be installed on the mobile phone 102 through a network connection or via a direct link. Alternatively, the client application 124 can be preinstalled and can be part of the operating system 120 described above.

A softphone application 126 can also be provided on the mobile phone 102. The softphone application 126 can receive incoming calls through a corporate network operated on a LAN. Generally, the incoming calls can be provided wirelessly and received by the mobile phone via Wireless LAN interface hardware (802.11) within the mobile phone. The softphone within the mobile phone 102 typically would be reached via a separate extension number off of the phone system. Through the softphone application 126, the user of the mobile phone 102 can receive calls over the corporate network while they are still within a covered zone, thus avoiding mobile phone charges.

The memory 106 can also include a collection of one or more APIs 128 for facilitating wireless communication between the mobile phone 102 and one or more remote I/O devices. The APIs 128 can be invoked by the applications to recognize and control the one or more remote I/O devices. In this manner, the mobile phone 102 is able to take advantage of services or functionalities of the one or more remote I/O devices.

The mobile phone 102 can also include a power supply 118, which can be implemented as one or more batteries, fuel cells, or other sources of electrical power. The power supply 118 might further include an external power source, such as an AC adapter or a powered docking cradle that supplements or recharges the batteries.

The mobile phone 102 can also include one or more audio, visual, and/or vibratory notification mechanisms 112. These notification mechanisms 112 can be directly coupled to the power supply 118 so that when activated, they remain on for a duration dictated by the notification mechanism 112 even though the processor 104 and other components might shut down to conserve energy. Examples of notification mechanisms 112 can include one or more LEDs, an audio interface, and a vibration generator. The one or more LEDs, when used, can be programmed to indicate the status of the device (e.g., on, off, charging, incoming call, message waiting, etc.). The audio interface, when used, can provide audible signals to, and receive audible signals from, the user. For example, the audio interface can be coupled to a speaker for providing audible output and to a microphone for receiving audible input, such as to facilitate a telephone conversation. The vibration generator, when used, can be programmed to vibrate to indicate a status of the device (e.g., vibrate when an incoming call or text message is received, when an alarm goes off, etc.).

The mobile phone 102 can also include at least one GPS receiver 114 that can facilitate determining location information of the mobile phone 102. The GPS receiver 114 can calculate its position using precise timing signals sent by GPS satellites. These signals can include information such as the time the message was transmitted, precise orbital information, and the general system health and rough orbits of all GPS satellites. The location information can then be integrated into the client application 124.

While location information can be obtained from the GPS receiver 114, those skilled in the relevant art will appreciate that the present application is not necessarily limited to a GPS implementation and that location information can be obtained through alternative devices. The mobile phone 102 can also include a telecommunications wireless module 116, such as a GPRS or WiFi module that facilitates wireless connectivity between the mobile phone 102 and the outside world via the communications network.

For purposes of illustration, a set of examples will be provided below to provide details of the location based call routing system and method provided within the present applications. These examples are given so that a general understanding of this application can be understood by those skilled in the relevant art. The examples provided below assume that the user has properly configured multiple zones. The examples begin with routing calls when the mobile phone 102 is within the user's place of business. Continuing, the examples shows routing features when the mobile phone 102 is outside the user's place of business. Finally, in the last example, the mobile phone 102 is then introduced into another recognized zone. Following the examples, generic processes provided in the form of flow charts will be provided.

### Business Campus Zone

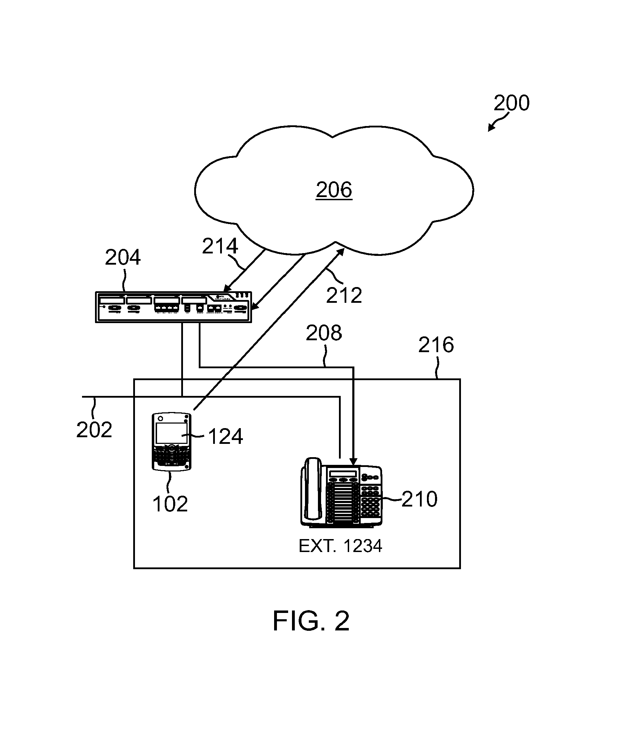

Figure 2 is a block diagram illustrating automatic call routing features within a business environment 200 in accordance with one aspect of the present application. The environment 200 shows a user of a mobile phone 102 entering into a business campus 216. Those skilled in the relevant art will appreciate that the environment 200 presented within Figure 2 can also relate to any other recognized zones where the user has properly configured.

As shown, when the user arrives at the business campus 216, the client application 124 on their GPS equipped mobile phone 102 can periodically record their GPS location using the mobile phone's GPS receiver 114 and send the location coordinates to a phone system 204 via a GPRS data link 212 provided by their cellular network provider 206. As will become apparent from the following discussion, the phone system 204 can also be referred to as a communication system or VoIP system controller 204. The phone system 204 can attempt to determine if the location provided by the mobile phone 102 falls within a list of predefined "Reach Me Here" zones stored for that user.

When the phone system 204 determines that there is no match, the phone system 204 can route incoming calls 214 to the mobile phone 102 via the cellular network 206. On the other hand, and as shown in Figure 2, when the phone system 204 matches the mobile phone's location to a configured zone, i.e. the business campus 216, the incoming call 214 can be routed over a call routing path 208 to an IP phone 210 having the extension 1234. The call routing path 208 can be over a corporate LAN 202.

A multi point zone can also be defined for the business campus 216 or large area. Incoming calls 214 can be routed over a call routing path 208 to the user's SIP softphone application 126 on their mobile phone 102 causing their mobile phone 102 to ring, instead of their IP phone 210. The call routing path 208 can be associated with the corporate LAN 202, which can allow the user to save mobile phone minutes as well as allow them to access their phone system 204 features and applications via the softphone 126.

While typically the call routing takes place on the phone system 204, in other embodiments, the incoming call 214 can be received by the mobile phone 102 and thereafter, the mobile phone 102 can route the call to the appropriate phone number. Those skilled in the relevant art will appreciate that call routing can take place on the cellular network provider 206 as well.

### Non-Recognized Zone

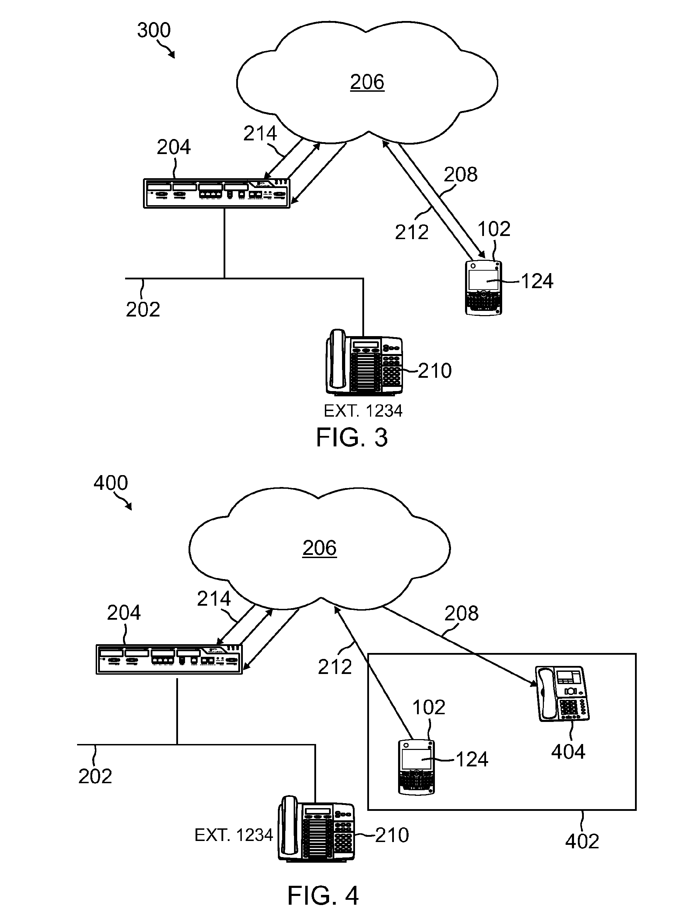

Continuing with the illustration provided above, Figure 3 represents exemplary call routing features when a user departs outside a known location in accordance with one aspect of the present application. In the shown environment 300, the user has left the business campus 216 and is no longer in any predefined "Reach Me Here" zones. Those skilled in the relevant art will appreciate that the following processes can be used when the user leaves any recognized zone and enters into a non-recognized zone.

The client application 124 on their GPS equipped mobile phone 102 can periodically record the GPS location using the mobile phone's GPS receiver 114. The location coordinates can then be sent to the phone system 204 via the GPRS data link 212 provided by their cellular network provider 206. The phone system 204 can determine if the location falls within a list of predefined "Reach Me Here" zones stored for that user.

As shown within Figure 3, no match with any recognized zones are made so the phone system 204 can change the call routing to match "Out of Zone" routing rules for that user. Often, this results in the phone system 204 changing the call routing path 208 from extension 1234 of IP phone 210 on the corporate LAN 202 to the user's mobile phone 102. Afterwards, incoming calls 214 are routed to the user's mobile phone 102 causing that phone to ring.

### Private Zone

When the user returns to a recognized zone, incoming calls 214 can then be routed again as depicted in Figure 4. As shown in the environment 400, the user arrives at their home 402. The client application 124 on their GPS equipped mobile phone 102 can periodically record the GPS location using the mobile phone's GPS receiver 114 and send the location coordinates to the phone system 204 via the GPRS data link 212 provided by their cellular network provider 206. The phone system 204 can determine that the user is within their home 402 so that the phone system 204 can change the call routing. From that point on, incoming calls 214 to the mobile phone can be routed to the user's home phone 404 causing that phone to ring.

In another embodiment, incoming calls 214 to the IP phone 210 located within the business campus 216 can be routed to the home phone 404 as well. Instead of routing calls over the corporate LAN 202 to the IP phone 210, the phone system 204 can recognize that calls should be routed to a zone where the mobile phone 102 currently resides.

The examples provided in Figures 2, 3, and 4 were presented for illustrative purposes and should not be construed as limiting the scope of the present application. Those skilled in the relevant art will appreciate that the system and method described herein can be extended to numerous recognized zones. These recognized zones do not have to be a zone where the user enters frequently, but instead can include any zone that the user configures.

Furthermore, while incoming calls 214 were mainly routed to other phone systems when the mobile phone's location was determined to be within a configured zone, other incoming information can also be routed such as SMS, MMS, etc.

### Mobile Phone Configuration

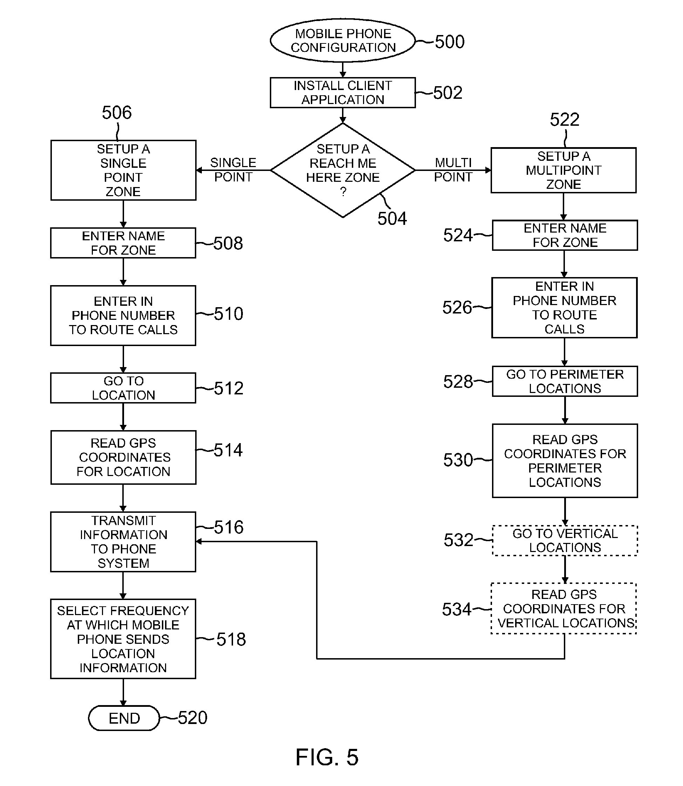

In typical embodiments, before the phone system 204 can route incoming calls 214 to the appropriate device, the user can configure various zones. When configured and the mobile phone 102 is detected within the zone, the system controller 204 can direct the incoming call 214 to a routing phone number, which can be provided by the user or other authorized person. Figure 5 is a flow chart that shows exemplary processes for configuring a mobile phone 102 to route calls in accordance with one aspect of the present application. While exemplary processes are provided, those skilled in the relevant art will appreciate these processes can be changed to include fewer or more processes.

The mobile phone 102 configuration process can begin at block 500. At block 502 the user can install a client application 124 on their mobile phone 102. The client application 124 can be installed onto the mobile phone 102 by directly connecting the mobile phone 102 to a USB port or through downloading the client application 124 through the cellular network provider 206. In one embodiment, the client application 124 can be preinstalled when the phone is purchased. In another embodiment, the client application 124 can be run on software that is remotely executed, for example, over the Internet.

On the mobile phone 102, the user can configure "Reach Me Here" zones. At decision block 504, a determination can be made whether the user wishes to configure a single point zone or a multi point zone. At block 506, the setup processes for a single point zone are provided. The single point zone can be an area where a single coordinate is used to pinpoint the mobile phone's 102 location. For example, a single point zone can be an office.

To setup the single point zone, at block 508, the user can enter in the name of the zone that they wish to configure. The user can enter the name of the location through the keypad 110 of the mobile phone 102 or through some other method. Typically, a graphical user interface (GUI) can be provided on the mobile phone 102, and shown on the display 108, to facilitate user interactions. The GUI can be associated with the client application 124. The GUI interface can provide numerous menus and options. One such menu can be called the "Setup a Reach Me Here" menu.

At block 510, the user can enter a phone number that the user desires to route incoming calls 214 to. A GUI interface can also be provided to enter a phone number. In one embodiment, multiple routing numbers can be entered into a GUI. The multiple numbers can be given priorities in the event that one routing number gets discontinued or fails to be picked up.

Continuing with Figure 5, the user can define a zone that is associated with the entered in phone number. At block 512, and in accordance with one embodiment, the user can go to the location where they wish to define the zone. At block 514, the client application 124, using the GPS receiver 114, can read coordinates for the zone the user has positioned themselves at. In an alternative embodiment, the user can enter in the coordinates into their mobile phone 102 manually and thus, the user does not have to go to the zone for configuration.

Generally, when receiving a specific coordinate from the mobile phone 102, the phone system 206 can include surrounding areas to define the zone. In another embodiment, the mobile phone 102 can request additional information when the single coordinate is read such as what kind of room they are in, the dimensions of the room, etc. Using this information, the mobile phone 102 can define the zone. Those skilled in the relevant art will appreciate that a zone taken from a single point reading can be adjusted to include additional areas and is not limited to any form of adding additional area to that single point.

At block 516, the information provided by the user can be sent to the phone system 204 via the mobile phone's GPRS link 212. Typically, this includes the coordinates of the single point reading as well as the name and routing phone number. Other information provided by the mobile phone 102 can include the mobile phone's specific identification number. In one embedment, the mobile phone 102 can tie the information together and then send it to the phone system 204. Otherwise, the information can be sent individually.

Generally, the user can add new zones in the same way while physically located within the desired location, e.g. their home, a branch office, a hotel room, etc. Any number of zones can be identified and stored within the phone system 204 for call routing purposes. At block 518, after initial configuration is completed, i.e. at least one zone has been identified, the client application 124 can ask the user to specify the frequency at which the client should poll the GPS receiver 114 for location information. For example, the client application 124 can send location information to the phone system 204 every minute, hour, day, etc.

In another embodiment, the frequency can be set by the phone system 204. The frequency chosen can affect how quickly the power supply 118 is discharged. The more frequent the GPS receiver 114 is turned on, the more power is drawn. The user can change the frequency based on their experience and working mode. A time of day schedule can also be set for GPS polling as well as to help manage power supply 118. Accordingly, the user can change the frequency of polling based on the time of day and the day of the week to reduce power supply 118 during periods where it is not necessary to poll frequently or even at all such as after business hours. The setup of the single point zone can end at block 520.

Returning to decision block 504, a number of processes are illustrated for setting up multi point zones at block 522. As differentiated, a single point zone typically relies on a single GPS reading to define the zone. The single point zone is intended to define relatively small areas such as a user's office or a hotel room. When the user configures a single point zone, the client reads a single GPS location and sends it to the phone system 204 indicating that it is a single point zone.

In multi point zones, the client application 124 can define a boundary for the zone by defining a series of GPS coordinates. A multi point zone is intended to capture a larger area that can include a vertical component. This can be used to define zones such as the user's entire place of work or their entire home. To setup a multi point zone, the user can enter the name of the zone at block 524. The user can enter a call routing number at block 526. Those skilled in the relevant art will appreciate that a GUI or other type of interface can be provided to facilitate the receiving and sending of information.

To enter in the multi point zone, in accordance with one embodiment, the user can take four readings that define the outside horizontal boundary of the structure they are in, e.g. the building they work in or their home. The coordinates can be entered in by the user going to perimeter locations at block 528. This can involve the user walking to the front of the structure and taking a reading, the back of the structure and taking a reading and so on for each side at block 530. In other embodiments, the user can enter the coordinates manually into the mobile phone 102.

In some embodiments, vertical coordinates can also be taken. For example, the multi point zone can be an office building having multiple floors. At optional block 532, the user can be asked to go to the uppermost floor and take a reading and the lowest floor and take a reading. In one embodiment, the building that the user is in can be identified by the entered coordinates so that no vertical readings are taken. The mobile phone 102 can read the GPS coordinates of the vertical locations at block 534.

After reading these points, the information can be communicated by the client application 124 on their mobile phone 102 to the phone system 204 at block 516. The client application 124 on the phone system 204 can then calculate a three-dimensional boundary for the structure based on the points received and add additional area to cover margins of error. At block 518, the user can select the frequency which the GPS updates its location information. At block 520, the processes for configuring a multi point zone can end.

### Phone System Configuration

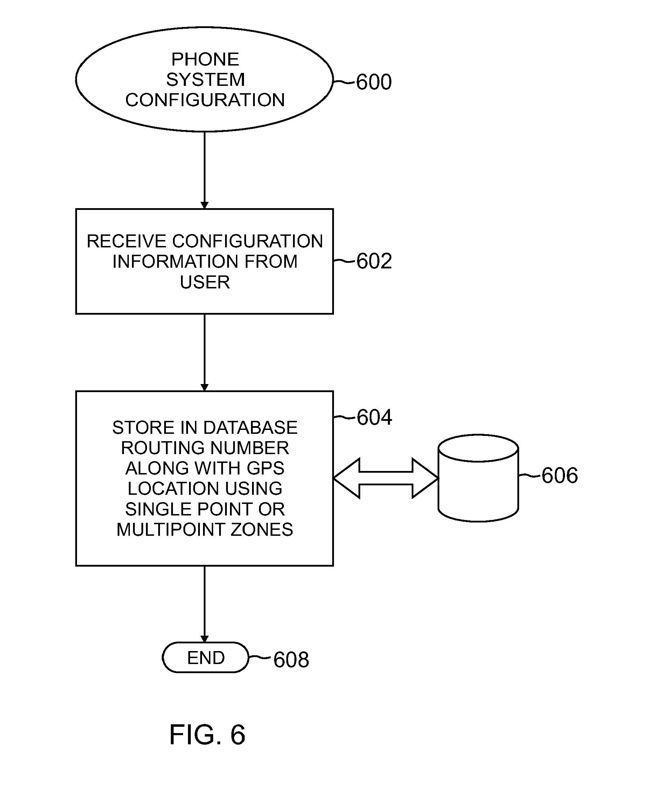

Figure 6 shows a typical configuration processes for a phone system 204 to route calls in accordance with one aspect of the present application. The phone system 204 can store location data against that user for call routing purposes. The processes for configuration the phone system 204 can begin at block 600. At block 602, the phone system 204 can receive configuration information from the user through the mobile phone 102. The configuration information can include single point zone and multi point zone data. As described above, the single point zone data can include a GPS coordinate along with a routing number. The single point zone can include areas that are near or around the single GPS coordinate reading. In addition thereto, the phone system 204 can receive multi point zone data. This information can include multiple GPS coordinates and the routing number.

At block 604, the phone system 204 can store the routing number along with the GPS location using single point or multi point zones in a database 606 associated with the phone system 204. The database 606 can include information for each user and their associated routing numbers. At block 608, the phone system 204 configuration processes can end.

### Call Routing

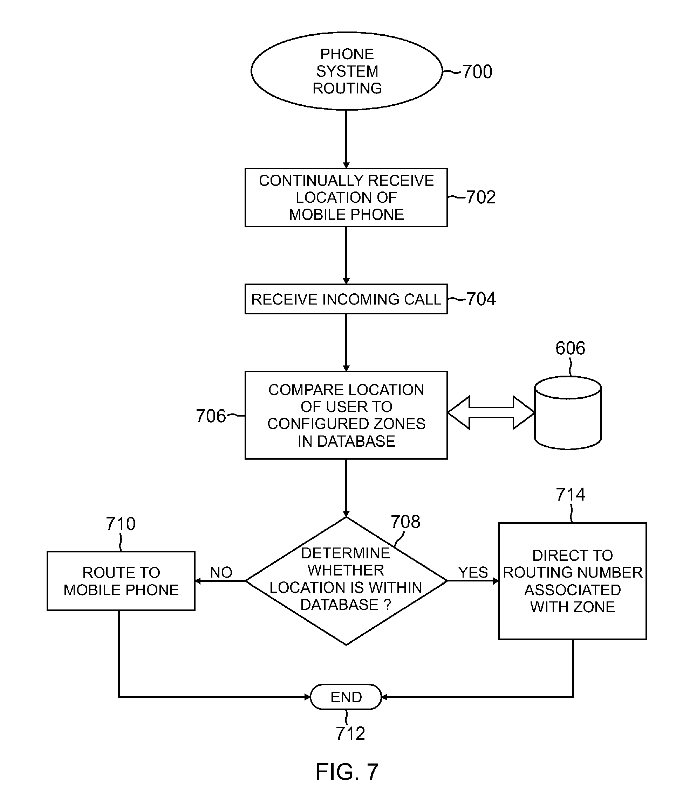

After the phone system 204 has been configured, incoming calls 214 can begin being routed. Figure 7 depicts illustrative processes for routing calls based on location information of the mobile phone 102 in accordance with one aspect of the present application. As shown above, the GPS location based call routing solution makes use of the GPS receiver 114 contained within many mobile phones 112 such as Apple's iPhone®, Google's Nexus One®, Palm's Treo®, and RIM's Blackberry®.

The phone system routing processes can begin at block 700. The client application 124 on the mobile phone 112 can poll the GPS receiver 114 on a regular interval for its current location. At block 702, the phone system 204 can continually receive the location of the mobile phone 102. The mobile phone 102 can transmit this location to the phone system 204 via the GPRS data link 212 provided by the cellular network provider 206.

At block 704, an incoming call 214 can be received by the phone system 204. The phone system 204 can then compare the location of the user of the mobile phone 102 to configured zones stored in the database 606 at block 706.

At decision block 708, the phone system 204 can determine whether the mobile phone's location can be matched with a configured zone stored within the database. Typically, this can be determined by using the mobile phone's location received at block 702 and comparing those coordinates with the configured zones. When the location matches one of the user configured zones, the phone system 204 can apply the user configured call routing rules for that location at block 714. For example, if the zone identified was the user's home 402, the phone system 204 can automatically re-route calls placed to the user's office phone 210 to their home phone 404 until such time as they leave their home 402. The same would hold true for a regional office or other location. As the user roams from location to location, the client application in conjunction with the phone system 204 can constantly identify the user's location and determine if the user has moved into a "Reach Me Here" zone at which point it applies the call routing rules for that zone.

As show above, single point zones and multi point zones can be configured. Often, a single point zone can fall within a multi point zone. In typical embodiments, the phone system 204 can prioritize call routing to the single point zone over the multi point zone. In one example, the user can define a single point zone as their office and a multi point zone as the building their office is in. The user would set their call routing to direct calls to their desk phone when in their office. When the user leaves their office, however, the user can setup their call routing to direct calls over the corporate WiFi network if the user is located within the multi point zone. The call can be routed to the SIP Softphone application 126 running on their WiFi equipped mobile phone 102. Generally, the SIP softphone application 126 can be reached via a separate extension number off of the phone system 204. In this way, when the user walks out of their office they can continue to receive calls on their mobile phone 102 over the corporate network while they are still in the building and thus avoid cell phone charges. This also allows them to access the same features and communications applications that are available to them on their desk phone via the SIP softphone 126 on their mobile phone 102.

When the user leaves the building, e.g. they walk out to their car, the user would typically not be in a defined zone and the phone system 204 can route their calls to their mobile phone 102 over the cellular network provider 206. The same scenario above can be set up for a work at home situation where the user might have a home office with a teleworker extension off of their office phone system 204. As such, when the user is in their home office, incoming calls 214 can be routed to their teleworker desk phone. On the other hand, while the user is out of their office but still within the vicinity of the house, incoming calls 214 can be directed to their home phone number. As shown above, the above location based routing can change settings automatically as the user moves from one zone to another. The processes can end at block 712.

Returning to decision block 708, when the user is not in any defined "Reach Me Here" zone, the phone system 204 can route calls to the mobile phone 102, as shown at block 710. The processes can end at block 712.

### Systems, Methods, and Operations

In accordance with one aspect of the present application, a call routing system is provided. The call routing system can include a mobile phone having a positioning system for determining a location of the mobile phone. The mobile phone can provide the location to a communication service provider that directs incoming calls of the mobile phone to a routing number when the location of the mobile phone is within an area configured with the routing number.

In one embodiment, the area configured with the routing number can be defined using the mobile phone. In one embodiment, the routing number can be associated with an application running on the mobile phone so that incoming calls are directed to the mobile phone. In one embodiment, the routing number can be associated with a corporate network number.

In accordance with another aspect of the present application, a phone system is provided. The phone system can include a database for storing user configuration information, wherein the user configuration information defines a first zone associated with a first routing number and a second zone associated with a second routing number, the first zone located within the second zone. The phone system can include at least one processor and a memory operatively coupled to the processor, the memory storing program instructions that when executed by the processor, causes the processor to perform processes.

The processes can include receiving location data from a user's device. The processes can include routing a call to the first routing number when the location data received from the user's device indicates the user's device is in the first zone. The processes can include routing the call to the second routing number when the location data received from the user's device indicates the user's device is in the second zone and not in the first zone. The processes can include routing the call to the user's device when the location data received from the user's device indicates the user's device is not in the first zone and not in the second zone.

In one embodiment, wherein the memory storing program instructions, when executed by the processor, causes the processor to receive the configuration information from the user's device and store the configuration information into the database. In one embodiment, the first zone can define a user's room and the second zone defines a user's house. In one embodiment, the first zone can be an office and the second zone can be a building that contains the office. In one embodiment, receiving the location data from the user's device occurs periodically.

In one embodiment, the first zone can be configured using a single coordinate. In one embodiment, the second zone can be configured using multiple coordinates. In one embodiment, the multiple coordinates can define a horizontal boundary. In one embodiment, the multiple coordinates further can define a vertical boundary. In one embodiment, wherein the memory storing program instructions, when executed by the processor, causes the processor to route the call without dropping the call between the first routing number, the second routing number, and the user's device when the location data indicates the user's device moving in and out of the first zone and the second zone.

In accordance with yet another aspect of the present application, a method for routing calls based on locations of a mobile phone is provided. The method can include defining at least one zone through the global positioning system and receiving a routing number associated with the at least one zone. The method can include providing the at least one zone with the routing number to a phone system and determining a location of the mobile phone using the global positioning system. The method can include providing the location to the phone system, wherein the phone system receives a call and routes the call to the routing number when the location of the mobile phone is within the at least one zone.

In one embodiment, defining the at least one zone using the global positioning system can include taking a single location reading. In one embodiment, the at least one zone defined by the single location reading is determined by adding additional areas around the single location reading. In one embodiment, defining the at least one zone using the global position system can include taking multiple location readings.

In one embodiment, the phone system can route the call to a softphone application running on the mobile phone when the mobile phone is within the at least one zone. In one embodiment, providing the location to the phone system can be based on frequency preferences defined on the mobile phone.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A call routing system comprising:
a mobile phone having a positioning system for determining a location of said mobile phone,
wherein said mobile phone provides said location to a communication service provider that directs incoming calls of said mobile phone to a routing number when said location of said mobile phone is within an area configured with said routing number.

2. The call routing system of claim 1, wherein said area configured with said routing number is defined using said mobile phone.

3. The call routing system of claim 1 or claim 2, wherein said routing number is associated with a softphone application running on said mobile phone so that incoming calls are directed to said mobile phone, and optionally wherein said routing number is associated with a corporate network number.

4. A phone system comprising:
a database for storing user configuration information, wherein said user configuration information defines a first zone associated with a first routing number and a second zone associated with a second routing number, said first zone located within said second zone;
at least one processor; and a memory operatively coupled to said processor, said memory storing program instructions that when executed by said processor, causes said processor to:
receive location data from a user's device;
route a call to said first routing number when said location data received from said user's device indicates said user's device is in said first zone;
route said call to said second routing number when said location data received from said user's device indicates said user's device is in said second zone and not in said first zone;
route said call to said user's device when said location data received from said user's device indicates said user's device is not in said first zone and not in said second zone.

5. The phone system of claim 4, wherein said memory storing program instructions, when executed by said processor, causes said processor to receive said configuration information from said user's device and store said configuration information into said database.

6. The phone system of claim 5 or claim 5, wherein said first zone defines a user's room area and said second zone defines a user's house.

7. The phone system of claim 4 or claim 5, wherein said first zone is an office and said second zone is a building that contains said office.

8. The phone system of any of claims 4 to 7, wherein receiving said location data from said user's device occurs periodically.

9. The phone system of any of claims 4 to 8, wherein said first zone is configured using a single coordinate and/or wherein said second zone is configured using multiple coordinates, and optionally wherein said multiple coordinates define a horizontal boundary, and optionally wherein said multiple coordinates further define a vertical boundary.

10. The phone system of claim any of claims 4 to 9, wherein said memory storing program instructions, when executed by said processor, causes said processor to route said call between said first routing number, said second routing number, and said user's device when said location data indicates said user's device moving in and out of said first zone and said second zone.

11. In a mobile phone having a global positioning system, a method for routing calls based on locations of said mobile phone, said method comprising:
defining at least one zone through said global positioning system;
receiving a routing number associated with said at least one zone;
providing said at least one zone with said routing number to a phone system;
determining a location of said mobile phone using said global positioning system;
and
providing said location to said phone system, wherein said phone system receives a call and routes said call to said routing number when said location of said mobile phone is within said at least one zone.

12. The method of claim 11, wherein defining said at least one zone using said global positioning system comprises taking a single location reading, and optionally wherein said at least one zone defined by said single location reading is determined by adding additional areas around said single location reading.

13. The method of claim 11 or claim 12, wherein defining said at least one zone using said global position system comprises taking multiple location readings.

14. The method of any of claims 11 to 13, wherein said phone system routes said call to a softphone application running on said mobile phone when said mobile phone is within said at least one zone.

15. The method of any of claims 11 to 14, wherein providing said location to said phone system is based on frequency preferences defined on said mobile phone.
